**Europäisches Patentamt**

**European Patent Office**

**Office européen des brevets**

(19)

(11) Publication number: **0 015 672**
**B1**

(12) ## EUROPEAN PATENT SPECIFICATION

(45) Date of publication of patent specification: **17.09.86**

(51) Int. Cl.⁴: **A 61 C 1/07, A 61 C 17/02**

(21) Application number: **80300446.4**

(22) Date of filing: **15.02.80**

(54) **Vibratory device, work tool assembly, and dental scaler incorporating them.**

(30) Priority: **16.02.79 US 12631**
**02.04.79 US 26378**
**05.11.79 US 91012**

(43) Date of publication of application:
**17.09.80 Bulletin 80/19**

(45) Publication of the grant of the patent:
**17.09.86 Bulletin 86/38**

(84) Designated Contracting States:
**BE DE FR GB IT NL SE**

(56) References cited:
**DE-A-2 342 868**
**US-A-3 075 288**
**US-A-3 368 280**
**US-A-3 375 583**
**US-A-3 518 766**
**US-A-3 589 012**
**US-A-3 703 037**
**US-A-3 823 477**
**US-A-3 956 826**
**US-A-4 038 571**
**US-E- 29 687**

(73) Proprietor: SYNTEX (U.S.A.) INC.
**3401 Hillview Avenue**
**Palo Alto, California 94304 (US)**

(72) Inventor: **Nash, John E.**
**145 Oak Street**
**Downington, Pennsylvania 19335 (US)**
Inventor: **Knopp, Arthur A.**
**501 Upper Stump Road**
**Chalfont, Pennsylvania 18914 (US)**

(74) Representative: **Armitage, Ian Michael et al**
**MEWBURN ELLIS & CO. 2/3 Cursitor Street**
**London EC4A 1BQ (GB)**

Courier Press, Leamington Spa, England.

## Description

Power driven dental scalers are well known. Of particular interest herein is a dental scaler having a vibratable scaling work tool for removing calculus, stain or plaque from teeth, which dental scaler utilizes a stream of water to aid in scaling efficiency and in removal of accumulated debris.

Of the power driven dental scalers currently available, most common are scalers utilizing a flow of compressed air or a solid-state ultrasonic transducer to cause a scraping type work tool to vibrate.

Typical of the earlier air-driven dental scalers are those of US—A—3,082,529 and US—A—3,444,622 to Mills et al, which scalers utilize an air-driven ball contained in a chamber. Movement of the ball against the walls of the chamber imparts vibration to the chamber, which vibrations are then transmitted to the scraping tool. A more recent type of air-driven scaler, described in US—A—3,526,962 to Fuerst, utilizes a rotatable mandrel which has an irregularly-shaped tip engaged with a reciprocable block in which the mandrel tip is received.

It is characteristically a problem of these air-driven scalers that much of the vibrational energy generated by the vibrator motor is transferred to the handle portion of the dental scaler rather than to the scraper work tool. Moreover, the modes of vibration of these scalers may change as moving parts of the vibration generating mechanism wear with time.

In US—A—3,703,037 to Robinson, there is described a dental scaler which utilizes a solid state ultrasonic transducer to provide constant modes of vibration for coupling with particular types of work tools. One disadvantage of the ultrasonic scaler, however, is the cost of the transducer and its fairly sophisticated ultrasonic generator.

A different air-driven dental scaler is disclosed in US—E—29,687 to Sertich. This dental scaler has very few moving parts as compared to the aforementioned mechanically complicated air-driven scalers and provides efficient transfer of vibrational energy to a scraping type work tool with relatively little vibration being transferred to the handle portion of the instrument. Moreover, this type of scaler provides uniform modes of constant vibration which may be matched with the vibratory modes of various types of work tools without the need for complicated electronic components.

It has been found that a flow of water over a tooth surface can provide increased scaling efficiency and patient comfort by lubricating and cooling the tooth surface and by flushing scaled debris and blood from the surface and area being cleaned. A work tool having a fluid path therethrough is described in US—A—3,368,280 to Friedman et al. The fluid path consists of a narrow bore in the shank of the work tool itself or a bore in the wall of the work tool connector designed to direct the fluid flow over the dog leg of the work tool to impinge on the tip. A disadvantage of the Friedman device is that it is extremely difficult to accurately machine a narrow bore in the shank of the work tool, particularly when it is made of very hard materials, or to machine within the wall of the tool connector itself. Additionally, the bore opens into a plenum in the connector itself, resulting in a discontinuous inner surface which can cause an increase in the collection of debris and make cleaning difficult.

A solid state type dental scaler utilizing a flow of water to improve cleaning efficiency is described in US—A—4,038,571 to Hellenkamp. One disadvantage of the Hellenkamp device, in addition to that of relatively high cost, is the shock hazard associated with the use of both electrical power and water in a hand-held instrument.

US—A—3,375,583 (Blank et al) is directed to an ultrasonic dental tool having a work tool with a threaded end for engagement with a work holder member and an axial bore, which is counterbored to receive a work tool element and a tube for transfer of water therethrough to impinge in a spray form on the extreme terminal end of the work tool. The tube extends out of the work tool, bridging substantially the entire length of the work tool element, to direct water onto the extreme terminal end of the work tool element. One disadvantage of the work tool described by US—A—3,375,583 is that the water tube does not extend continuously between the ends of the work tool. Consequently, sediment and mineral deposits can collect in the area of the junction of the bore and counter-bore, and proper cleaning of the work tool in that area is difficult. Furthermore, the water tube extends into the work area of the work tool element where it can interfere with the proper operation of the work tool element on the teeth of a patient.

US—A—3,075,288 (Balamuth et al) describes a dental instrument having an internal feed of water to the work area. A work tool holder is provided with a longitudinal passage intersecting a radial passage at its inner end which is normally closed by a valve. Actuation of the valve permits water to flow through the radial passage, into the longitudinal passage, through a slot in the work tool and over the work tool surface. That construction is not entirely satisfactory since the discontinuous surfaces are difficult to clean and tend to collect sediment and deposits.

It would be desirable to have a non-electrical air-driven dental scaler having means for delivering water to the scaler tip which does not interfere with the operation of the scaler tip in the work area. Of particular advantage would be a relatively low-cost air-driven dental scaler having the scaling efficiency advantages of the "Sertich-type" scaler together with the advantage of water flow at the scaler tip to enhance the cleaning action.

A particular problem which occurs frequently in the use of dental instruments utilizing water transport tubes with small bores (such as 0.5 mm (0.020 inch) or less) is clogging of the tube with sediment or minerals carried in the stream of water. Hence, it is of benefit for a scaler to have a water supply tube that is easily accessible and can be cleaned quickly in the event it becomes clogged.

There is need, therefore, for a dental scaler, preferably air-driven, having fluid transport means incorporated therein for delivering water to a scaling tip which is less prone to clogging and which can be easily and completely cleaned in the event clogging occurs.

According to the present invention there is provided a vibratory device for a work took, comprising:

elongated casing means having a proximal end and a distal end;

resilient support means within said casing means;

a substantially rigid hollow shaft supported within said elongated casing means by said resilient support means;

work tool connecting means attached to the distal end of said hollow shaft, said work tool connecting means being capable of operatively connecting a work tool to the distal end of said hollow shaft; and

means for imparting vibration to said resiliently supported hollow shaft when said vibratory means is energised to provide vibratory movement to a work tool connected to said work tool connecting means;

characterised in that the device further includes liquid transport means comprising a tube disposed substantially coaxially within said hollow shaft, said tube having a proximal end and a distal end; and

a liquid seal assembly for supporting the distal end of said liquid transport tube within said hollow shaft;

said vibratory device having a vibrational node towards the distal end of said hollow shaft with the centre of gravity of said liquid seal assembly being disposed slightly forwardly of said vibrational node.

Preferably the device comprises:

support means for detachably supporting said liquid transport tube within said hollow shaft, said support means comprising sealing means disposed about the distal end of said liquid transport tube for forming a liquid-tight seal between said hollow shaft and said liquid transport tube, and coupling means for positioning the proximal end of said liquid transport tube within the proximal end of said casing means.

Preferably said work tool connecting means includes a work tool assembly comprising a hollow body having a first end and a second end, said first end being adapted for attachment with said hollow shaft and having a first orifice therein, said second end of the said body having a second orifice therein, a tube having a first end and a second end, said tube extending continuously from said first end of said body to said second end of said body, said first end of said tube being located within said first orifice, and a work tool having a first end and a second end, said first end being adapted for insertion into said second end of said body within said second orifice, said second end of said tool being adapted for performing an operative function on a tooth surface, said tool having a groove on the outer surface thereof extending from said first end of said tool to a position intermediate said first and second ends of said tool and outwardly of said second end of said body, a portion of said tube lying within said groove between said tool and said body.

The invention is therefore concerned with an arrangement for the transport of liquid to the working end of a vibratory device, and the relationship of that liquid transport means to a shaft which transmits the vibration to the working end of the device. In its general aspect the invention can be embodied in devices which are energized by any suitable means, but in a preferred aspect it is applicable especially to air-driven devices.

The invention also includes dental scalers incorporating vibratory devices hereof. A dental scaler as described herein can have an easily accessible and replaceable water transport tube within the work tool connector assembly. It is, therefore, quite compact and does not interfere with the vibratory pattern characteristic of this type of dental scaler.

FIG. 1 is a perspective view of a dental scaling instrument of this invention;

FIG. 2 is a longitudinal side elevational view, partly in section, of the dental scaler of FIG. 1;

FIG. 3 is a perspective view of a water seal assembly suitable for sealing the water transport tube within the dental scalers of FIGS. 1 and 2;

FIG. 4 is a perspective view of the water transport tube shown in FIGS. 1 and 2;

FIG. 5 is a schematic representation of a typical standing wave generated by a Sertich-type dental scaler illustrating the position of vibratory nodes within the scaler body;

FIG. 6 is an enlarged fragmentary view of the water seal assembly which provides a water tight seal between the vibratory shaft and the water transport tube;

FIG. 7 is a side sectional view of the nose piece and work tool associated with the scaler of FIG. 1 showing the fluid transport means associated with the work tool connector and the groove on the work tool for directing water from the water transport tube to the end of the scaling tip;

FIG. 8 is a cross-sectional view along line 8—8 of FIG. 7;

FIG 9 is an enlarged, fragmentary view illustrating the torque reaction means of the present invention; and

FIG. 10 is a cross-sectional view of the torque reaction means illustrated in FIG. 9.

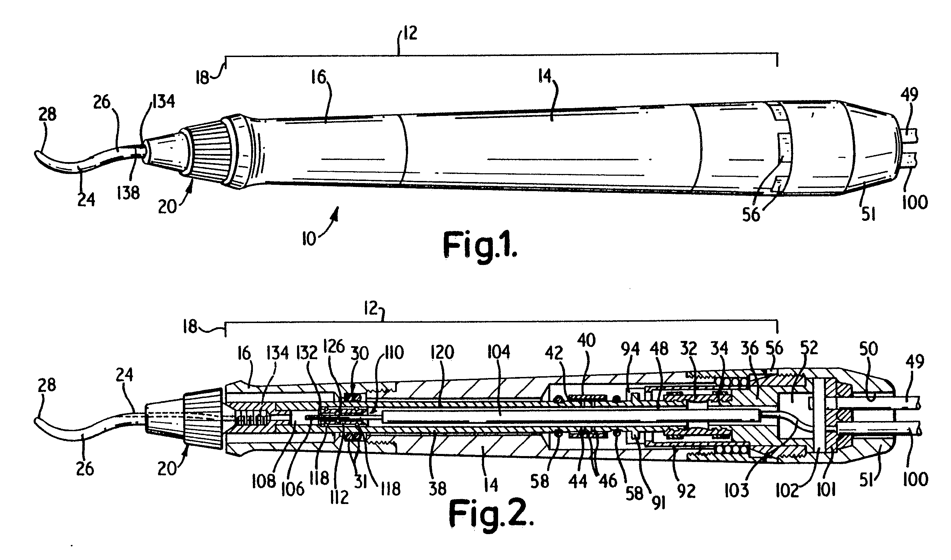

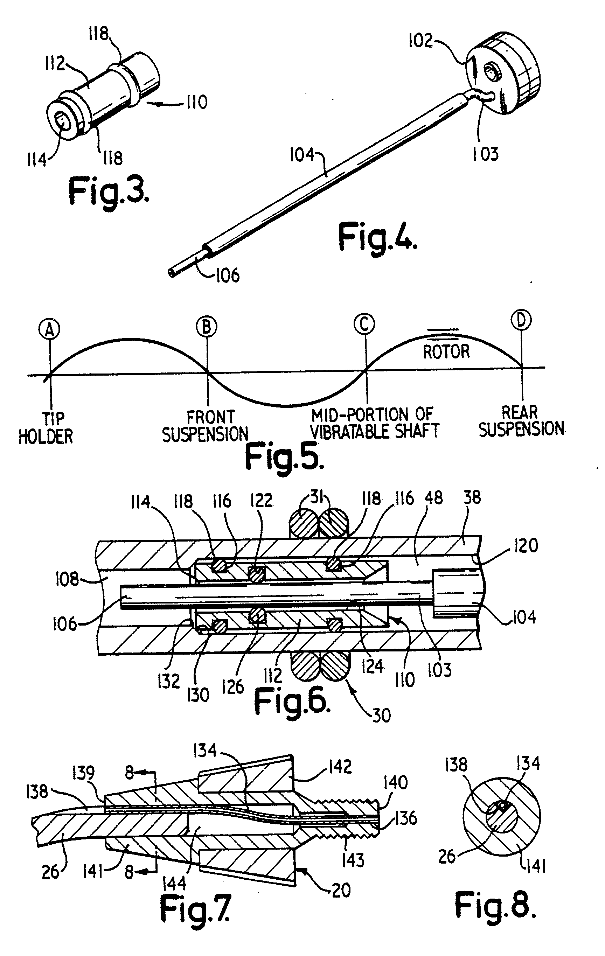

Illustrated in FIG. 1 is a dental scaling instrument 10 comprising a handle or casing means 12 which includes a barrel 14 and a neck 16. Attached to the distal end 18 of scaler 10 is the work tool assembly of the present invention, which is illustrated most clearly in FIGS. 7 and 8. That assembly generally comprises a connector designated 20 formed from an inner hollow body 141 and a knurled, outer knob 142. Knob 142 typically is press fit onto body 141 and provides a readily available area for grasping of connector 20 by an operator for attachment to distal end 18 of scaler 10. Body 141 has a threaded portion 143 for attachment to shaft 38 of scaler 10. End 140 includes a substantially cylindrical orifice 136 into which a first end of a tube 134 extends. A second end 139 of body 141 includes a substantially cylindrical orifice 144 into which the second end of tube 134 and shank 24 of tool 26 extend. The second end of tube 134 and a portion of tube 134 adjacent that end are secured within opening 144 of body 141 and positioned in a groove 138 in work tool 26. Groove 138 extends from the first or proximal end of work tool 26 toward the second or distal end of tool 26, to a position intermediate said first and second ends of tool 26 and outwardly from the end 139 of body 141. In that manner, water can be transported from end 140 of body 141 to end 139 of body 141 in a continuous conduit.

As shown most clearly in FIG. 8, groove 138 typically is V-shaped and tube 134 is substantially cylindrical. The outside diameter of work tool 26 is of substantially the same dimension as the inside diameter of body 141 at end 139. The outer diameter of tube 134 is chosen to fit within the space created by groove 138 and the inner wall of body 141.

An important feature of the present invention is that tube 134 establishes a smooth continuous fluid flow path from end 140 to end 139 of body 141. Establishment of a continuous flow path minimizes areas in which sediment or debris from the flowing fluid can collect. Additionally, the smooth inner surface of tube 134 minimizes deposition of mineral deposits from the water. It is presently preferred that the inner surface of tube 134 have a surface smoothness of 0.625 mm (25 micro-inches) or better. Furthermore, the internal diameter of tube 134 should be between about 0.25 to 0.46 mm (0.010—0.018 inch) in order to minimize problems from clogging with sediment and minimize excessive water transport to the scaling tip which can cause discomfort to the patient.

The structure of the work tool assembly of the present invention is adapted to utilize different materials in the fluid transport system and the work tool itself. In contrast to prior art devices having a bore or cavity within the work tool for transport of fluid, the present invention utilizes a flow path which is independent of the work tool itself. Accordingly, it is possible to use different materials for the work tool and the fluid transport means to accomplish their individual purposes in an efficacious manner. In most applications, it is desirable to have work tool 26 formed of a hard material so that it wears little during abrasion or impacting on materials on the tooth surface in which it comes in contact. Typically, tool 26 is formed from the martensitic stainless steels which can be hardened by heat treatment to increase their tensile strength above that in the untreated state. A problem associated with such steels however, is that they tend to exhibit inferior corrosion resistance. The constant flow of water in a bore or fluid pathway developed in a tool of the prior art which is formed from martensitic alloys, typically will undergo surface corrosion to form debris which tends to block the fluid transport bore. That deficiency in the prior art is avoided in the present invention, since it is possible to utilize a more non-corrosive stainless steel such as an austenitic stainless steel in the fluid tube 134 contemplated herein. Thus, the advantages of using a martensitic steel for work tool 26 and a more non-corrosive austenitic stainless steel for tube 134 can be advantageously employed. Illustrative of the austenitic stainless steels are the type 300 series including type 302, 303, 304 and 316 stainless steels. Illustrative of the martensitic stainless steels are those of type 400 including type 416 and 440C stainless steels. For dental applications a work tool formed of type 416 stainless steel has been eminently satisfactory.

In order to facilitate manufacture of the work tool assembly of the present invention, orifice 136 is sized to provide a clearance fit with the outside surface of tube 134. During assembly tube 134 and work tool 26 are pressed into body 141 in a direction toward the proximal end of scaler 10. Because orifice 136 establishes a clearance fit with tube 134 there is no difficulty in tube 134 passing through the orifice and being aligned therewith when the tip and tube assembly are pressed into body 141. When work tool 26 and tube 134 have been completely inserted into body 141, any excess tubing extending outwardly from end 140 of body 141 can be conveniently removed to make the first end of tube 134 flush with end 140 of body 141. The second or distal end of tube 134 can be flush with end 139 of body 141 or it can extend a small distance outwardly therefrom into groove 138 as long as the water flows into groove 138 and flows over and contacts the surface of work tool 26 as it proceeds to tip 28.

As will be described more fully hereinafter, during operation of the scaler when water seal assembly 110 is in contact with shoulder 132, plenum 108 receives water from tube 103 for delivery to the work tool assembly. Water flows from plenum 108 through tube 134 to the distal end of body 141 where the water then flows into groove 138 of work tool 26. The water flows over the surface of work tool 26 toward the terminal end 28 and is atomized by the vibratory motion of tip 28. The water mist so created provides lubrication, a cooling effect on the tooth surface upon which tool 26 is being applied and a soothing effect to the patient.

As shown in detail in the cross-sectional view of FIG. 2, handle 12 provides an elongated casing within which is mounted resilient support means comprising a first or front resilient support 30 including a pair of O-rings 31. A second or rear resilient support is provided by a cylindrical tube 32 of resilient material which is sleevably engaged about a boss portion 34 fast with a rigid rear support 36. Disposed substantially coaxially with respect to elongated handle 12 is a vibratable, substantially rigid, hollow shaft 38. Connector 20 is attached to the distal end of hollow shaft 38.

Disposed about a mid-portion of shaft 38 is a sleeve-like rotor 40. As shown in FIG. 2, during operation of the scaler, rotor 40 rotates about shaft 38, and establishes a gap 42 between rotor 40 and an adjacent portion of side wall 44 of shaft 38. In an actual assembly with rotor 40 at rest, rotor 40 will be supported upon shaft 38 so that a portion of rotor 40 will rest upon side wall portions of shaft 38. Located in side wall portions of shaft 38 are a plurality of outlet ports 46 which connect passageway 48 of shaft 38 to gap 42.

As indicated by the arrows in FIG. 2, a fluid medium, such as compressed air, is supplied from a source (not shown) through a supply tube 49 which passes through an axially disposed opening 50 in end cap 51. The flow of compressed air passes into plenum 52 and through passageway 48 to fluid media outlet ports 46. The flow of compressed air which exhausts through outlet ports 46 strikes the inner wall of rotor 40 and urges rotor 40 to rotate about shaft 38. Each of outlet ports 46 has an axis which is offset or spaced at a distance from the longitudinal axis of shaft 38, such that each port axis does not intersect the axis of shaft 38. Thus each of ports 46 directs a jet of air at a glancing angle with respect to the inner wall of rotor 40 so as to impart rotary movement to rotor 40.

After imparting rotary movement to rotor 40, the air exhausts through the gap 42 between rotor 40 and shaft 38 and is then exhausted from the interior of barrel 14 through exhaust ports 56 disposed circumferentially about a rearward portion 13 of barrel 14. Stop means comprising an annular-shaped guide 58 affixed to shaft 38 prevents excessive travel of rotor 40 in an axial direction toward the forward or distal end of shaft 38 so that rotor 40 will at all time have at least a portion thereof disposed over outlet ports 46. A further description of the manner in which the spinning rotor 40 imparts vibration to shaft 38 may be found in the aforementioned US—E—29,687, the disclosure of which is incorporated herein by reference.

The dental scaler further includes means for transporting water from an external source to work tool 26 and its curved end 28. A first water transport hose 100 located at the rearward or proximal end of scaler 10 is mounted in a detachable coupling 101. First water hose 100 is connected to an external source of water (not shown), the forward end of the hose being connected to one end of a rigid tube 103 which passes through a passageway in support body 102. Tube 103 is disposed substantially coaxially with respect to hollow shaft 38. Water transport tube 103 extends through hollow shaft 38 toward the distal end of scaler 10 and terminates distally from water seal assembly 110. Tube 103 is covered with an elastomeric tube covering 104 to eliminate vibration build-up within tube 103. The forward or distal end 106 of water tube 103 extends into plenum 108.

Water tube end 103 is supportably received within a water seal assembly 110 located at the forward or distal end of dental scaler 10. As shown in more detail in FIGS. 3 and 6, water seal assembly 110 comprises a cylindrical body 112 having a passageway 114 coaxially disposed with respect to the axis of body 112. Running circumferentially about the outer side wall of cylindrical body 112 are a pair of spaced annular grooves 116, one adjacent each end of cylindrical body 112. Disposed within each of grooves 116 is an O-ring 118 fabricated of a resilient material. O-rings 118 serve to position cylindrical body 112 within the forward end of hollow shaft 38 by frictional engagement of O-rings 118 with portions of inner wall 120 of hollow shaft 38. Within a mid-portion of cylindrical body 112 is a chamber formed by an annular groove 122 running circumferentially along a portion of inner wall 124 between grooves 116. Contained within groove 122 is an O-ring 126 which is in frictional engagement with the walls of groove 122 and with a portion of water tube end 106. O-ring 126 helps to properly position tube 103 centrally within hollow shaft 38.

Water seal assembly 110 provides a resilient support for water transport tube 103 within vibratable hollow shaft 38 by means of O-rings 118 and 126. Also, O-rings 118 and 126 provide a water-tight connection between plenum 108 and air passageway 48 within hollow shaft 38.

It is an advantage of the dental scaler of this invention that the water seal assembly 110 and water transport tubes 103 and 134 are easily replaceable in the event of failure of one of the sealing O-rings or of clogging of the water tubes. It is also a feature of this invention that a good water-tight seal is ensured by the sealing contact of the O-rings forming part of water seal assembly 110 with the adjacent portions of vibratable hollow shaft 38 and water tube 103. Illustrated in FIG. 5 is a schematic representation of a standing wave pattern generated within the dental scaler by vibration of shaft 38 at a frequency typically at about 6000 Hz. The standing wave characteristically has four vibrational nodes occurring at points "A", "B", "C" and "D". Node "A" occurs within or adjacent a portion of nose piece 20, node "B" within front suspension 30, node "C" at a mid-portion of vibratable hollow shaft 38 and node "D" close to rear suspension 32. Placement of the water seal assembly 110 close to a vibrational node (e.g., node "B") minimizes the amount of vibrational energy transferred to water tube 103 from hollow shaft 38, which transfer of vibration would drain energy from the vibrating shaft while at the same time cause turbulence within the water tube and/or possible vibratory failure of the tube.

By positioning the center of gravity of water seal assembly 110 slightly forwardly of node "B", that is, toward the distal end of scaler 10, annular edge 130 of cylindrical body 112 is maintained in contact with a shoulder 132 in a wall portion of shaft 38. Provided water seal assembly 110 is so positioned with its center of gravity forward of node "B", the centrifugal conical whirl of shaft 38 during its vibratory movement imparts a force on cylindrical body 112 tending to move body 112 in a forward axial direction toward the distal end of scaler 10, which axial force ensures continuous contact between cylindrical body 112 and shoulder 132 without the need for supplemental retaining means. The magnitude of the axial force, $F_A$, acting on cylindrical body 112 may be calculated by the following equation

$$F_A = mr\,\omega^2 \tan\alpha$$

wherein "m" is the mass of the water seal assembly, "r" is the radius of the orbit of revolution traced by the portion of the vibrating shaft for the particular axial position of the water seal assembly with respect to a node, "$\omega$" is the orbital speed of that portion of the vibratable shaft and "$\alpha$" is the angle established between the conically whirling vibratable shaft and the axis of the revolution of the shaft. This axial retaining force is especially needed to hold water seal assembly 110 in place when rotor 40 coasts to a standstill after the driving fluid is turned off, at which time there is no driving fluid pressure acting on assembly 110 to hold body 112 in its forwardmost distal position. The distance the water seal assembly should be positioned along the axis forward of node "B" can be related to the frequency of vibration, $\omega$. This distance forward of node "B" is up to about one-quarter of a vibrational wavelength, generally about one-sixteenth to about one-quarter of a vibrational wavelength, with the axial position of the center of gravity of the water seal assembly preferably being at a distance of just less than about one-quarter wavelength forward of the vibrational node.

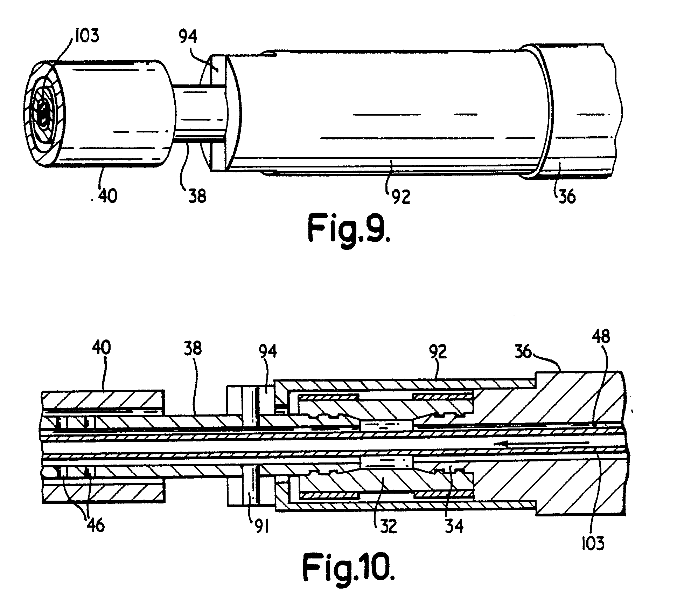

The illustrated dental scaler further includes torque reaction means to resist twisting movement applied to tube or shaft 38 when work tool 26 is tightened onto or loosened from shaft 38. The torque reaction means as depicted in FIGS. 9 and 10, comprises a sleeve 92 adapted to be a fixed extension of rigid rear support 36. The sleeve extension 92 has a diameter substantially less than that of support 36. A portion of sleeve extension 92 provides a slot 94.

Vibratable shaft 38 is mounted within sleeve extension 92 upon a resilient support as provided by a cylindrical tube or cylinder 32 of resilient material. One end of cylinder 32 is engaged around a boss 34 which is integrally formed with the body portion of the torque reaction means. The other end of cylinder 32 is engaged about a proximal end portion of vibratable tube 38. The passageway 48 provides means for transmitting air through the torque reaction means to the proximal end of shaft 38 and outlet ports 46.

Affixed to a portion of shaft 38 is a torque reaction pin 91, which projects into slots 94 of sleeve extension 92. Gaps between pin 91 and the walls defining slots 94 allow limited movement of shaft 38 in the clockwise or counter-clockwise directions during tightening or loosening of a work tool threadably engaged with the distal end of vibratable shaft 38. Typically, shaft 38 may move as much as 30° before pin 91 contacts sleeve extension 92, although more or less movement may be provided by widening or narrowing slots 94. The lost motion connection between pin 91 and slot 94 thus provides for isolation of the vibratable tube from metallic portions of sleeve extension 92 so that transmission of vibration from shaft 38 to the handle portion is minimized.

Although this invention has been described with reference to the incorporation of means for transporting water through the dental scaler of this invention, it is also contemplated that other fluids, such as medicaments (e.g., caries-removing liquids) or prophalytic or therapeutic agents (e.g., liquid fluoride compositions) compatible with dental practice can be used in conjunction therewith.

Although this invention has been described with reference to a dental scaler, it is also applicable to vibratory devices of like or similar configuration which are used for other purposes, such as medical, veterinary, and general industrial cleaning, polishing and deburring, etc. Such vibratory devices can have water, air, paraffin or other fluid materials transported therethrough in accordance with the teachings of this invention.

By centrally or axially positioning the water transport means of this invention within the vibratable hollow shaft and within the work tool assembly, the overall size and dimension of the scaler does not change; therefore, good weight balance and tactile control are retained, and the scaler stays sufficiently small to be inserted, without undue discomfort, into the patient's mouth. In addition, by supporting the water transport means and the vibratable shaft in the manner as shown, energy losses through transfer of vibration from the shaft to the water tube are minimized, as is generation of noise which might be objectionable to both operator and patient alike. Through use of the detachable coupling 101, the water seal assembly 110, the water transport means in the work tool assembly, and the associated elements, as described herein, the water supply function is obtained in a manner which is readily repaired or replaced if the need arises.

**Claims**

1. A vibratory device for a work tool, comprising:
elongated casing means (12, 14, 16, 51) having a proximal end and a distal end (18);
resilient support means (30, 32) within said casing means;
a substantially rigid hollow shaft (38) supported within said elongated casing means by said resilient support means;
work tool connecting means (20) attached to the distal end of said hollow shaft, said work tool connecting means being capable of operatively connecting a work tool (26) to the distal end of said hollow shaft; and

means (40) for imparting vibration to said resiliently supported hollow shaft when said vibratory means is energised to provide vibratory movement to a work tool connected to said work tool connecting means;

characterised in that the device further includes liquid transport means comprising a tube (103) disposed substantially coaxially within said hollow shaft (38), said tube having a proximal end and a distal end; and

a liquid seal assembly (110) for supporting the distal end of said liquid transport tube within said hollow shaft;

said vibratory device having a vibrational node (B) towards the distal end of said hollow shaft with the centre of gravity of said liquid seal · assembly (110) being disposed slightly forwardly of said vibrational node (B).

2. A vibratory device according to claim 1 comprising:

support means for detachably supporting said liquid transport tube within said hollow shaft, said support means comprising sealing means (110) disposed about the distal end of said liquid transport tube for forming a liquid-tight seal between said hollow shaft and said liquid transport tube, and coupling means (101) for positioning the proximal end of said liquid transport tube within the proximal end of said casing means (12, 51).

3. The vibratory device of claim 2 wherein said coupling means (101) includes a support body (102) having a passageway therethrough, the proximal end of said liquid transport tube (103) passing through said passageway and adapted to be connected to an external source of liquid.

4. The vibratory device of any one of claims 1, 2 and 3 wherein

said hollow shaft (38) has shoulder means (132) disposed upon an inner wall portion of said hollow shaft, said shoulder means disposed distally of said vibrational node (B); and

said liquid seal assembly (110) comprises a hollow cylindrically-shaped body (112) having a forward surface (130) adapted to contact said hollow shaft shoulder means.

5. The vibratory device of claim 4 wherein said cylindrically-shaped body has a forward annular groove and a rearward annular groove (116) on the exterior surface thereof, an O-ring (118) disposed within said forward annular groove and an O-ring (118) disposed within said rearward annular groove, said O-rings co-operating with portions of the inner wall of said hollow shaft to resiliently support said liquid seal assembly (110) within said hollow shaft (38).

6. The vibratory device of claim 5 wherein one or both of said O-rings (118) form a liquid-tight seal with said portions of the inner wall of said hollow shaft in contact therewith.

7. The vibratory device of any one of claims 4, 5 and 6 wherein said cylindrically-shaped body (112) has a passageway (114) extending therethrough, an annular groove (122) in the wall (124) of said cylindrically-shaped body defining said passageway, an O-ring (126) within said groove for resiliently supporting said liquid transport tube (103) within said passageway, said liquid transport tube forming a liquid-tight seal with said O-ring (126) in contact therewith.

8. The vibratory device of any one of the preceding claims wherein said liquid seal assembly (110) is disposed distally of the vibrational node (B) at a distance up to about one-quarter of a vibrational wavelength.

9. A vibratory device according to any one of the preceding claims wherein said work tool connecting means includes a work tool assembly comprising a hollow body (141) having a first end (140) and a second end (139), said first end being adapted (143) for attachment with said hollow shaft (38) and having a first orifice (136) therein, said second end (139) of said body having a second orifice (144) therein, a tube (134) having a first end and a second end, said tube extending continuously from said first end (140) of said body to said second end (139) of said body, said first end of said tube being located within said first orifice (136), and a work tool (26) having a first end and a second end, said first end being adapted for insertion into said second end (139) of said body within said second orifice (144), said second end (28) of said tool (26) being adapted for performing an operative function on a tooth surface, said tool having a groove (138) on the outer surface thereof extending from said first end of said tool to a position intermediate said first and second ends of said tool and outwardly of said second end (139) of said body, a portion of said tube (134) lying within said groove between said tool and said body.

10. The vibratory device of claim 9 wherein said tube (134) has an internal diameter of between about 0.25 and 0.46 mm (0.010 and 0.018 inches).

11. The vibratory device of claim 9 or claim 10 wherein said tube (134) is formed of an austenitic stainless steel.

12. The vibratory device of claim 9 or claim 10 wherein said tube is formed of an austenitic stainless steel and said tool (26) is formed of a martensitic stainless steel.

13. The vibratory device of any one of claims 9 to 12 wherein the inner surface finish of said tube (134) is smoother than about 0.625 mm (25 microinches).

14. The vibratory device of any one of claims 9 to 13 wherein said groove (138) is V-shaped.

15. The vibratory device of any one of the preceding claims further comprising:

torque reaction means (36, 92, 94) affixed to said elongated casing means and associated (91) with said shaft (38) for resisting torque applied to said shaft during torsional engagement or disengagement of a work tool with said work tool connecting means.

16. The vibratory device of claim 15 wherein said torque reaction means comprises

a substantially cylindrical torque reaction tube (92) coaxially disposed about one end of said shaft (38); and

lost motion connecting means (91, 94) connecting said substantially cylindrical tube (92) with said shaft (38).

17. The vibratory device of claim 16 wherein said lost motion connecting means comprises a slot (94) in one end portion of said substantially cylindrical tube (92) and a pin (91) affixed to said shaft (38) transversely with respect to said shaft, said pin engaging said slot so as to form a lost motion connection between said substantially cylindrical tube and said shaft to limit rotation of said shaft within said substantially cylindrical tube.

18. The vibratory device of claim 17 further comprising

a first resilient support (32) connected to the proximal end of said vibratable shaft·(38), said first resilient support comprising a cylindrically shaped tube one end of which is in overlying and frictional engagement with said vibratable shaft;

a rigid support member (36) capable of fitting engagement with the elongated casing means (12, 14, 16, 51), said rigid (36) support member having a boss portion (34) frictionally engaged with the other end of said cylindrically shaped tube (32) of said first resilient support.

19. The vibratory device of claim 18 wherein said torque reaction means comprises

a sleeve (92) fixedly attached to said rigid support member (36) with said sleeve overlying said first resilient support (32), said sleeve having at least one slot (94) therein overlying a portion of the proximal end of said vibratable shaft (38); and

stop means fixedly attached to a portion of said vibratable shaft (38) at its proximal end, said stop means comprising at least one pin (91) extending transversely of the axis of said shaft and into said slot (94), said slot and said pin having dimensions sufficient to provide a lost motion connection between said vibratable shaft (38) and said sleeve (92) in a direction clockwise or counter-clockwise of the axis of said vibratable shaft.

20. A dental scaler incorporating a vibratory device according to any one of the preceding claims.

**Revendications**

1. Dispositif vibratoire pour un outil de travail, comprenant:

un boîtier allongé (12, 14, 16, 51) ayant une extrémité proximale et une extrémité distale (18);

des moyens élastiques de support (30, 32) à l'intérieur dudit boîtier allongé;

une tringle creuse sensiblement rigide (38) supportée à l'intérieur dudit boîtier allongé par lesdits moyens élastiques de support;

des moyens (20) de raccordement d'un outil de travail reliés à l'extrémité distale de ladite tringle creuse, lesdits moyens de raccordement de l'outil de travail étant capables de relier fonctionnellement un outil de travail (26) à l'extrémité distale de ladite tringle creuse; et

des moyens (40) destinés à communiquer une vibration à ladite tringle creuse supportée élastiquement lorsque lesdits moyens vibratoires sont actionnés pour transmettre un mouvement vibratoire à un outil de travail raccordé auxdits moyens de raccordement d'un outil de travail;

caractérisé en ce que le dispositif comprend en outre des moyens de transport de liquide comportant un tube (103) disposé à peu près coaxialement à l'intérieur de ladite tringle creuse (38), ledit tube ayant une extrémité proximale et une extrémité distale; et

un ensemble (110) de joint d'étanchéité aux liquides destiné à supporter l'extrémité distale dudit tube de transport de liquide à l'intérieur de ladite tringle creuse;

ledit dispositif vibratoire ayant un noeud de vibration (B) vers l'extrémité distale de ladite tringle creuse, le centre de gravité dudit ensemble (110) de joint d'étanchéité aux liquides étant disposé légèrement en avant dudit noeud de vibration (B).

2. Dispositif vibratoire selon la revendication 1, comprenant:

des moyens de support destinés à supporter de façon amovible ledit tube de transport de liquide à l'intérieur de ladite tringle creuse, lesdits moyens de support comprenant des moyens (110) d'étanchéité disposés autour de l'extrémité distale dudit tube de transport de liquide afin de former un joint étanche aux liquides entre ladite tringle creuse et ledit tube de transport de liquide, et des moyens d'accouplement (101) destinés à positionner l'extrémité proximale dudit tube de transport de liquide à l'intérieur de l'extrémité proximale dudit boîtier (12, 51).

3. Dispositif vibratoire selon la revendication 2, dans lequel lesdits moyens (101) d'accouplement comprennent un corps (102) de support traversé par un passage, l'extrémité proximale dudit tube (103) de transport de liquide s'étendant dans ledit passage et étant conçue pour être raccordée à une source extérieure de liquide.

4. Dispositif vibratoire selon l'une quelconque des revendications 1, 2 et 3, dans lequel

ladite tringle creuse (38) comporte un épaulement (132) disposé sur une partie de paroi intérieure de ladite tringle creuse, ledit épaulement étant disposé du côté distal dudit noeud (B) de vibration; et

ledit ensemble (110) de joint d'étanchéité aux liquides comprend un corps creux (112) de forme cylindrique présentant une surface avant (130) conçue pour entrer en contact avec l'épaulement de la tringle creuse.

5. Dispositif vibratoire selon la revendication 4, dans lequel ledit corps de forme cylindrique présente une gorge annulaire avant et une gorge annulaire arrière (116) à sa surface extérieure, une bague torique (118) disposée à l'intérieur de ladite gorge annulaire avant et une bague torique (118) disposée à l'intérieur de ladite gorge annulaire arrière, lesdites bagues toriques coopérant avec des parties de la paroi intérieure de ladite tringle creuse pour supporter élastiquement ledit ensemble (110) de joint d'étanchéité aux liquides à l'intérieur de ladite tringle creuse (38).

6. Dispositif vibratoire selon la revendication 5, dans lequel l'une desdites bagues toriques (118) ou les deux forment un joint d'étanchéité aux liquides avec lesdites parties de la paroi intérieure de ladite tringle creuse en contact avec elles.

7. Dispositif vibratoire selon l'une quelconque des revendications 4, 5 et 6, dans lequel ledit corps (112) de forme cylindrique est traversé par un passage (114), une gorge annulaire (122) située dans la paroi (124) dudit corps de forme cylindrique définissant ledit passage, une bague torique (126) à l'intérieur de ladite gorge pour supporter élastiquement ledit tube (103) de transport de liquide à l'intérieur dudit passage, ledit tube de transport de liquide formant un joint étanche aux liquides avec ladite bague torique (126) en contact avec lui.

8. Dispositif vibratoire selon l'une quelconque des revendications précédentes, dans lequel ledit ensemble (110) de joint d'étanchéité aus liquides est disposé du côté distal du noeud (B) de vibration, à une distance pouvant atteindre environ un quart d'une longueur d'onde de vibration.

9. Dispositif vibratoire selon l'une quelconque des revendications précédentes, dans lequel lesdits moyens de raccordement de l'outil de travail comprennent un ensemble d'outil de travail comprenant un corps creux (141) ayant une première extrémité (140) et une seconde extrémité (139), ladite première extrémité étant conçue (143) pour être reliée à ladite tringle creuse (38) et ayant un premier orifice (136), ladite seconde extrémité (139) dudit corps ayant un second orifice (144), un tube (134) ayant une première extrémité et une seconde extrémité, ledit tube s'étendant de façon continue de ladite première extrémité (140) dudit corps jusqu'à ladite seconde extrémité (139) dudit corps, ladite première extrémité dudit tube étant située à l'intérieur dudit premier orifice (136), et un outil de travail (26) ayant une première extrémité et une seconde extrémité, ladite première extrémité étant conçue pour être insérée dans ladite seconde extrémité (139) dudit corps à l'intérieur dudit second orifice (144), ladite seconde extrémité (28) dudit outil (26) étant conçue pour effectuer une opération fonctionnelle sur la surface d'une dent, ledit outil ayant une gorge (138) à sa surface extérieure, s'étendant de ladite première extrémité dudit outil jusqu'à une position située entre lesdites première et seconde extrémités dudit outil et vers l'extérieur de ladite seconde extrémité (139) dudit corps, une partie dudit tube (134) s'étendant dans ladite gorge entre ledit outil et ledit corps.

10. Dispositif vibratoire selon la revendication 9, dans lequel ledit tube (134) présente un diamètre intérieur compris entre environ 0,25 et 0,46 mm (0,010 et 0,018 inch).

11. Dispositif vibratoire selon la revendication 9 ou la revendication 10, dans lequel ledit tube (134) est formé d'un acier inoxydable austénitique.

12. Dispositif vibratoire selon la revendication 9 ou la revendication 10, dans lequel ledit tube est formé d'un acier inoxydable austénitique et ledit outil (26) est formé d'un acier inoxydable martensitique.

13. Dispositif vibratoire selon l'une quelconque des revendications 9 à 12, dans lequel la finition de la surface intérieure dudit tube (134) correspond à une rugosité inférieure à environ 0,625 mm (5 micro-inches).

14. Dispositif vibratoire selon l'une quelconque des revendications 9 à 13, dans lequel ladite gorge (138) est de forme en V.

15. Dispositif vibratoire selon l'une quelconque des revendications précédentes, comprenant en outre:

des moyens de réaction de couple (36, 92, 94) fixés audit boîtier allongé et associés (91) à ladite tringle (38) afin de résister à un couple appliqué à ladite tringle pendant la prise en torsion d'un outil de travail avec lesdits moyens de raccordement de l'outil de travail, ou sa séparation desdits moyens.

16. Dispositif vibratoire selon la revendication 15, dans lequel lesdits moyens de réaction de couple comprennent

un tube sensiblement cylindrique (92) de réaction de couple disposé coaxialement autour d'une extrémité de ladite tringle (38); et

des moyens (91, 94) de liaison à chemin perdu reliant ledit tube sensiblement cylindrique (92) à ladite tringle (38).

17. Dispositif vibratoire selon la revendication 16, dans lequel lesdits moyens de liaison à chemin perdu comprennent une rainure (94) située dans une partie extréme dudit tube sensiblement cylindrique (92) et une goupille (91) fixée à ladite tringle (38) transversalement à ladite tringle, ladite goupille étant engagée dans ladite rainure pour former une liaison à chemin perdu entre ledit tube sensiblement cylindrique et ladite tringle afin de limiter la rotation de ladite tringle à l'intérieur dudit tube sensiblement cylindrique.

18. Dispositif vibratoire selon la revendication 17, comprenant en outre

un premier support élastique (32) relié à l'extrémité proximale de ladite tringle vibrante (38), ledit premier support élastique comprenant un tube de forme cylindrique dont une extrémité est emboîtée à frottement et s'étend sur ladite tringle vibrante;

un élément rigide de support (36) pouvant être enclenché étroitement avec le boîtier allongé (12, 14, 16, 51), ledit élément rigide (36) de support comportant un bossage (34) qui est enclenché à frottement avec l'autre extrémité dudit tube (32) de forme cylindrique dudit premier support élastique.

19. Dispositif vibratoire selon la revendication 18, dans lequel lesdits moyens de réaction de couple comprennent

un manchon (92) relié fixement audit élément rigide (36) de support, ledit manchon s'étendant sur ledit premier support élastique (32), ledit manchon présentant au moins une rainure (64) s'étendant sur une partie de l'extrémité proximale de ladite tringle vibrante (38); et

des moyens de butée reliés fixement à une partie de ladite tringle vibrante (38), à son extrémité proximale, lesdits moyens de butée comprenant au moins une goupille (91) s'étendant transversalement à l'axe de ladite tringle et pénétrant dans ladite rainure (94), ladite rainure et ladite goupille ayant des dimensions suffisantes pour établir une liaison à chemin perdu entre ladite tringle vibrante (38) et ledit manchon (92) dans le sens des aiguilles d'une montre ou en sens opposé sur l'axe de ladite tringle vibrante.

20. Grattoir dentaire comprenant un dispositif vibratoire selon l'une quelconque des revendications précédentes.

**Patentansprüche**

1. Schwingungsvorrichtung für ein Werkzeug, die umfaßt:

ein längliches Gehäuse (12, 14, 16, 51) mit einem körpernahen Ende und einem körperfernen Ende (18);

federnde Tragmittel (30, 32) in dem Gehäuse;

einen im wesentlichen steifen, hohlen Schaft (38), der durch die federnden Tragmittel in dem länglichen Gehäuse getragen wird;

Werkzeugverbindungsmittel (20), die an dem körperfernen Ende des hohlen Schafts angebracht sind, wobei die Werkzeugverbindungsmittel zur betriebsmäßigen Verbindung eines Werkzeugs (26) an dem körperfernen Ende des hohlen Schafts eingerichtet sind; und

Mittel (40) zum Mitteilen einer Schwingung an den federnd getragenen hohlen Schaft, wenn das Schwingungsmittel erregt ist, um eine Schwingungsbewegung einem Werkzeug mitzuteilen, welches an den Werkzeugverbindungsmitteln angebracht ist,

dadurch gekennzeichnet, daß die Vorrichtung weiter Flüssigkeitstransportmittel einschließen, die ein Rohr (103), umfassen, welches im wesentlichen koaxial innerhalb des hohlen Schafts (38) angeordnet ist und ein körpernahes Ende sowie ein körperfernes Ende aufweist, sowie

eine Flüssigkeitsdichtungsanordnung (110) zum Tragen des körperfernen Endes des Flüssigkeitstransportrohrs innerhalb des hohlen Schafts einschließt;

une daß die Schwingungsmittel einen Schwingungsknoten (B) zu dem körperfernen Ende des hohlen Schafts hin aufweisen und der Schwerpunkt der Flüssigkeitsdichtungsanordnung (110) wenig vor dem Schwingungsknoten (B) angeordnet ist.

2. Schwingungsvorrichtung nach Anspruch 1, dadurch gekennzeichnet, daß sie Tragmittel zum lösbaren Tragen des Flüssigkeitstransportrohrs innerhalb des hohlen Schafts auweist, daß die Tragmittel Dichtungsmittel (110) umfassen, welche um das körperferne Ende des Flüssigkeitstransportrohrs angeordnet sind, um eine Flüssigkeitsdichtung zwischen dem hohlen Schaft und dem Flüssigkeitstransportrohr zu bilden, und daß sie Kopplungsmittel (101) zum Positionieren der körpernahen Endes des Flüssigkeitstransportrohrs in dem körpernahen Ende des Gehäuses (12, 51) umfaßt.

3. Schwingungsvorrichtung nach Anspruch 2, dadurch gekennzeichnet, daß die Kopplungsmittel (101) einen Trägerkörper (102) einschließen, welcher einen hindurchgehenden Durchgang aufweist, und daß das körpernahe Ende des Flüssigkeitstransportrohrs (103) durch den Durchgang hindurchtritt und zum Anschluß an eine externe Flüssigkeitsquelle ausgebildet ist.

4. Schwingungsvorrichtung nach einem der Ansprüche 1, 2 und 3,

dadurch gekennzeichnet, daß der hohle Schaft (38) Schultermittel (132) aufweist, die an einem inneren Wandteil des hohlen Schafts angeordnet sind und körperfern von dem Schwingungsknoten (B) angeordnet sind;

und daß die Flüssigkeitsdichtungsanordnung (110) einen hohlen zylindrischen Körper (112) umfaßt, welcher eine vordere Oberfläche (130) aufweist, die zur Anlage der Schultermittel des hohlen Schafts ausgebildet ist.

5. Schwingungsvorrichtung nach Anspruch 4, dadurch gekennzeichnet, daß der zylindrische Körper eine vordere ringförmige Rille und eine hintere ringförmige Rille (116) auf seiner äußeren Oberfläche aufweist, daß ein O-Ring (118) in der vorderen ringförmigen Rille angeordnet ist und ein O-Ring (118) in der hinteren ringförmigen Rille angeordnet ist und daß die O-Ringe mit Teilen der inneren Wand des hohlen Schafts dergestalt zusammenwirken, daß sie die Flüssigkeitsdichtungsanordnung (110) in dem hohlen Schaft (38) federnd tragen.

6. Schwingungsvorrichtung nach Anspruch 5, dadurch gekennzeichnet, daß einer der O-Ringe (118) oder beide O-Ringe (118) eine Flüssigkeitsdichtung mit den Teilen der inneren Wand des hohlen Schafts bilden, mit denen sie in Berührung stehen.

7. Schwingungsvorrichtung nach einem der Ansprüche 4, 5 und 6,

dadurch gekennzeichnet, daß der zylindrische Körper (112) einen sich durch ihn erstreckenden Durchgang (114) aufweist, daß eine ringförmige Rille (122) in der Wand (124) des zylindrischen Körpers den Durchgang begrenzt, daß ein O-Ring (126) in der Rille das Flüssigkeitstransportrohr (103) federnd innerhalb des Durchgangs trägt und daß das Flüssigkeitstransportrohr eine Flüssigkeitsdichtung mit dem O-Ring (126) bildet, mit dem es in Berührung steht.

8. Schwingungsvorrichtung nach einem der vorangehenden Ansprüche,

dadurch gekennzeichnet, daß die Flüssigkeitsdichtungsanordnung (110) körperfern des Schwingungsknotens (B) in einem Abstand von ungefähr einer Viertel der Schwingungswellenlänge angeordnet ist.

9. Schwingungsvorrichtung nach einem der vorangehenden Ansprüche, dadurch gekennzeichnet, daß die Werkzeugverbindungsmittel eine Werkzeughalterung einschließen, die einen Hohlkörper (141) mit einem ersten Ende (140) und einem zweiten Ende (139) umfaßt, daß das erste Ende zur Anbringung ann dem hohlen Schaft (38) ausgebildet ist (143) und in ihm eine erste Öffnung (136) aufweist, daß das zweite Ende (139) des Hohlkörpers eine zweite Öffnung (144) in ihm aufweist, daß sie ein Röhrchen (134) umfaßt, das ein erstes und ein zweites Ende hat und sich fortlaufend von dem ersten Ende (140) des Hohlkörpers zu dessen zweitem Ende (139) erstreckt, daß das erste Ende des Röhrchens innerhalb der ersten Öffnung (136) angeordnet ist und daß sie ein Werkzeug (26) umfaßt, das ein erstes und ein zweites Ende aufweist, daß dessen erstes Ende zum Einstecken in das zweite Ende (139) des Hohlkörpers in die zweite Öffnung (144) hinein ausgebildet ist, daß das zweite Ende (28) des Werkzeugs (26) zum Ausüben eines Eingriffs auf einer Zahnoberfläche ausgebildet ist, daß das Werkzeug eine Rille (138) auf dessen äußerer Oberfläche aufweist, die sich von dem ersten Ende des Werkzeugs zu einer Stelle zwischen dem ersten Ende und dem zweiten Ende des Werkzeugs und von dem zweiten Ende (139) des Hohlkörpers weg ersteckt und daß ein Teil des Röhrchens (134) innerhalb der Rille zwischen dem Werkzeug und dem Hohlkörper liegt.

10. Schwingungsvorrichtung nach Anspruch 9, dadurch gekennzeichnet, daß das Röhrchen (134) einen Innendurchmesser zwischen ungefähr 0,25 und 0,46 mm (0,010 und 0,018 Inch) aufweist.

11. Schwingungsvorrichtung nach Anspruch 9 oder 10, dadurch gekennzeichnet, daß das Röhrchen (134) aus einem austenitischen rostfreien Stahl geformt ist.

12. Schwingungsvorrichtung nach Anspruch 9 oder 10, dadurch gekennzeichnet, daß das Röhrchen aus einem austenitischen rostfreien Stahl geformt ist und daß das Werkzeug (26) aus einem martensitischen rostfreien Stahl ausgebildet ist.

13. Schwingungsvorrichtung nach einem der Ansprüche 9—12, dadurch gekennzeichnet, daß die innere Oberflächenglätte des Röhrchens (134) glatter als ungefähr 0,625 mm (25 Mikro-Inch) ist.

14. Schwingungsvorrichtung nach einem der Ansprüche 9—13, dadurch gekennzeichnet, daß die Rille (138) V-förmig ist.

15. Schwingungsvorrichtung nach einem der vorangehenden Ansprüche, dadurch gekennzeichnet, daß sie ferner Torsionsreaktionsmittel (36, 92, 94) umfaßt, die an dem länglichen Gehäuse befestigt und mit dem Schaft (38) verbunden sind, um diesen gegen eine Torsion abzustützen, welche dem Schaft während eines Dreheingriffs oder eines Drehlösens eines Werkzeugs mit den Werkzeugverbindungsmitteln mitgeteilt wird.

16. Schwingungsvorrichtung nach Anspruch 15, dadurch gekennzeichnet, daß die Torsionsreaktionsmittel ein im wesentlichen zylindrisches Torsionsreaktionsrohr (92), welches um ein Ende des Schafts (38) koaxial angeordnet ist, sowie mit einem toten Gang behaftete Verbindungsmittel (91, 94) umfassen, welche das im wesentlichen zylindrische Rohr (92) mit dem Schaft (38) verbinden.

17. Schwingungsvorrichtung nach Anspruch 16, dadurch gekennzeichnet, daß die mit einem toten Gang behafteten Verbindungsmittel einen Schlitz (94) in einem Endteil des im wesentlichen Zylindrischen Rohrs (92) sowie einen Stift (91) umfassen, welcher an dem Schaft (38) quer zu diesem angebracht ist, dergestalt daß der Stift, welcher in den Schlitz eingreift eine mit totem Gang behaftete Verbindung zwischen dem im wesentlichen zylindrischen Rohr und dem Schaft bildet, welche eine Drehung des Schaftes innerhalb des im wesentlichen zylindrischen Rohrs begrenzt.

18. Schwingungsvorrichtung nach Anspruch 17, dadurch gekennzeichnet, daß sie weiter einen ersten federnden Träger (32) umfaßt, der an dem körpernahen Ende des schwingungsfähigen Schafts (38) angebracht ist und ein zylindrisches Rohr aufweist, dessen eines Ende sich in überlappender Reibverbindung mit dem schwingungsfähigen Schaft befindet, daß sie weiter ein steifes Trägerelement (36) umfaßt, welches zum passenden Eingriff in das längliche Gehäuse (12, 14, 16, 51) ausgebildet ist und einen Nabenteil (34) aufweist, der in Reibeingriff mit dem anderen Ende des zylindrisch geformten Rohrs (32) des ersten federnden Trägers steht.

19. Schwingungsvorrichtung nach Anspruch 18, dadurch gekennzeichnet, daß die Torsionsreaktionsmittel eine Hülse (92) umfassen, die fest an dem festen Trägerelement (36) angebracht ist und dabei den ersten federnden Träger (32) überlappt, daß die Hülse wenigstens einen Schlitz (94) in ihr aufweist, die einen Teil des körpernahen Endes des schwingungsfähigen Schafts (38) überlappt; und daß die Torsionsreaktionsmittel Anschlagmittel an dem körpernahen Ende des schwingungsfähigen Schafts (38) umfassen, welche wenigstens einen Stift (91) aufweisen, welcher sich quer zu der Achse des Schafts in den Schlitz (94) erstreckt, daß der Schlitzt und der Stift ausreichend dimensioniert sind, um eine mit totem Gang behaftete Verbindung zwischen dem schwingungsfähigen Schaft (38) und der Hülse (92) im Uhrzeigersinn oder entgegen dem Uhrzeigersinn der Achse des schwingungsfähigen Schafts zu bilden.

20. Zahnsteinschaber, dadurch gekennzeichnet, daß er eine Schwingungsvorrichtung nach einem der vorangehenden Ansprüche aufweist.

Fig.1.

Fig.2.

0 015 672

Fig.3.

Fig.4.

Fig.5.

Fig.6.

Fig.7.

Fig.8.

2

Fig.9.

Fig.10.